## Europäisches Patentamt
## European Patent Office
## Office européen des brevets

(19)

(11) Veröffentlichungsnummer: **0 416 441 A1**

(12)
# EUROPÄISCHE PATENTANMELDUNG

(21) Anmeldenummer: **90116451.7**

(22) Anmeldetag: **28.08.90**

(51) Int. Cl.5: **B65B 35/04, B65G 47/51**

(30) Priorität: **08.09.89 DE 3929980**

(43) Veröffentlichungstag der Anmeldung:
**13.03.91 Patentblatt 91/11**

(84) Benannte Vertragsstaaten:
**DE FR GB IT**

(71) Anmelder: **Maschinenfabrik Alfred Schmermund GmbH & Co.
Brüggerfelder Strasse 16-18
W-5820 Gevelsberg(DE)**

(72) Erfinder: **Knecht, Siegfried
Deichselbach 7
W-5820 Gevelsberg(DE)**

(74) Vertreter: **Sparing Röhl Henseler
Patentanwälte European Patent Attorneys
Rethelstrasse 123
W-4000 Düsseldorf 1(DE)**

(54) Vorrichtung zum Fördern von quaderförmigen Gegenständen.

(57) Die Erfindung betrifft eine Vorrichtung zum Fördern von quaderförmigen Gegenständen (2) über eine Förderstrecke (1) zwischen zwei Verpackungsstationen, mit einem ersten Sensor (3) zum Feststellen eines Staus am Abgabeende der Förderstrecke und einem Speicher (5). Um eine einfache, störunanfällige Konstruktion zu erzielen, ist vorgesehen, daß sich die Förderstrecke (1) durch den Speicher (5) hindurcherstreckt, an dessen Austrittsende ein zweiter Sensor (4) und ein davon in Gang setzbarer Stopper (6) für einen als vorhanden festgestellten Gegenstand (2) angeordnet ist, wobei der Speicher (5) wenigstens eine Zange (8) für eine Reihe von Gegenständen (2) zum Aus- bzw. Einschwenken der ergriffenen Gegenstände aus der bzw. in die Förderstrecke (1) umfaßt, wobei die Zange (8) zum Greifen und Ausschwenken über einen am Eintrittsende des Speichers befindlichen dritten Sensor (7), wenn dieser während einer Zeit länger als die Durchlaufzeit eines Gegenstandes einen solchen feststellt, und zum Einschwenken und Freigeben über Freigabesignale des ersten und dritten Sensors (3, 7) betätigbar ist.

Fig. 1

Fig. 2

Fig. 3

EP 0 416 441 A1

Die Erfindung betrifft eine Vorrichtung zum Fördern und Zwischenspeichern von quaderförmigen Gegenständen, insbesondere Zigarettenpäckchen, über eine sich zwischen einem Aufgabe- und einem Abgabeende erstreckende Förderstrecke zur Anordnung zwischen zwei Verpackungsstationen, mit einem an der Förderstrecke angeordneten, ersten Sensor zum Feststellen eines Staus von Gegenständen am Abgabeende der Förderstrecke und einem über ein Auslösesignal des ersten Sensors mit einer Vielzahl von Gegenständen füllbaren Speicher sowie einen Speicher für eine Vielzahl von quaderförmigen Gegenständen, mit um eine Achse drehbaren Speicherelementen.

Bei der Zigarettenverpackung findet üblicherweise die Verpackung der Zigaretten auf einem Zigarettenpacker statt. Die hierauf gefertigten Zigarettenpäckchen werden dann noch einer Folieneinschlagmaschine zugeführt, um mit einer Umhüllung aus Klarsichtfolie versehen zu werden. Da bei beiden Maschinen Störungen auftreten können, hat man in der Förderstrecke vom Zigarettenpacker zur Folieneinschlagmaschine bereits Speicher für Zigarettenpäckchen vorgesehen, die momentan nicht benötigte Zigarettenpäckchen aufnehmen und bei Bedarf abgeben. Solche Speicher sind beispielsweise in den DE-Osen 30 25 527, 24 02 855, 26 40 867 oder 31 37 948 beschrieben. Die hierbei verwendeten Konstruktionen sind jedoch im allgemeinen kompliziert und damit selbst störanfällig.

Aufgabe der Erfindung ist es, eine Vorrichtung der eingangs genannten Art zu schaffen, die einfach und damit wenig störanfällig auch bei großer Pufferkapazität ist.

Diese Aufgabe wird dadurch gelöst, daß sich die Förderstrecke durch den Speicher hindurcherstreckt, an dessen Austrittsende ein zweiter Sensor zum Feststellen des Vorhandenseins eines Gegenstandes und ein davon in Gang setzbarer Stopper für den als vorhanden festgestellten Gegenstand angeordnet ist, wobei der Speicher wenigstens eine Zange zum Greifen einer Reihe aus einer Vielzahl von Gegenständen und Aus- bzw. Einschwenken der ergriffenen Reihe von Gegenständen aus der bzw. in die Förderstrecke umfaßt, wobei die Zange zum Greifen und Ausschwenken über einen am Eintrittsende des Speichers befindlichen dritten Sensor, wenn dieser während einer Zeitspanne länger als die Durchlaufzeit eines Gegenstandes einen Gegenstand feststellt, und zum Einschwenken und Freigeben über Freigabesignale des ersten und dritten Sensors betätigbar ist.

Hierbei ist es zweckmäßig, einen Speicher der eingangs genannten Art zu verwenden, bei dem die Speicherelemente Zangen sind, deren Greifbacken sich in Achsrichtung erstrecken und die in Greifstellung zur Aufnahme jeweils einer Reihe von Gegenständen vorgespannt sind, wobei die Zangen schrittweise in eine Übergabeposition zur Aufnahme bzw. Abgabe jeweils einer Reihe von Gegenständen beweglich und die sich in der Übergabeposition befindliche Zange in Freigabeposition bringbar ist.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.

Fig. 1 bis 3 zeigen schematisch eine Vorrichtung zum Fördern von Zigarettenpäckchen von einem Zigarettenpacker zu einer Folieneinschlagmaschine in verschiedenen Betriebszuständen.

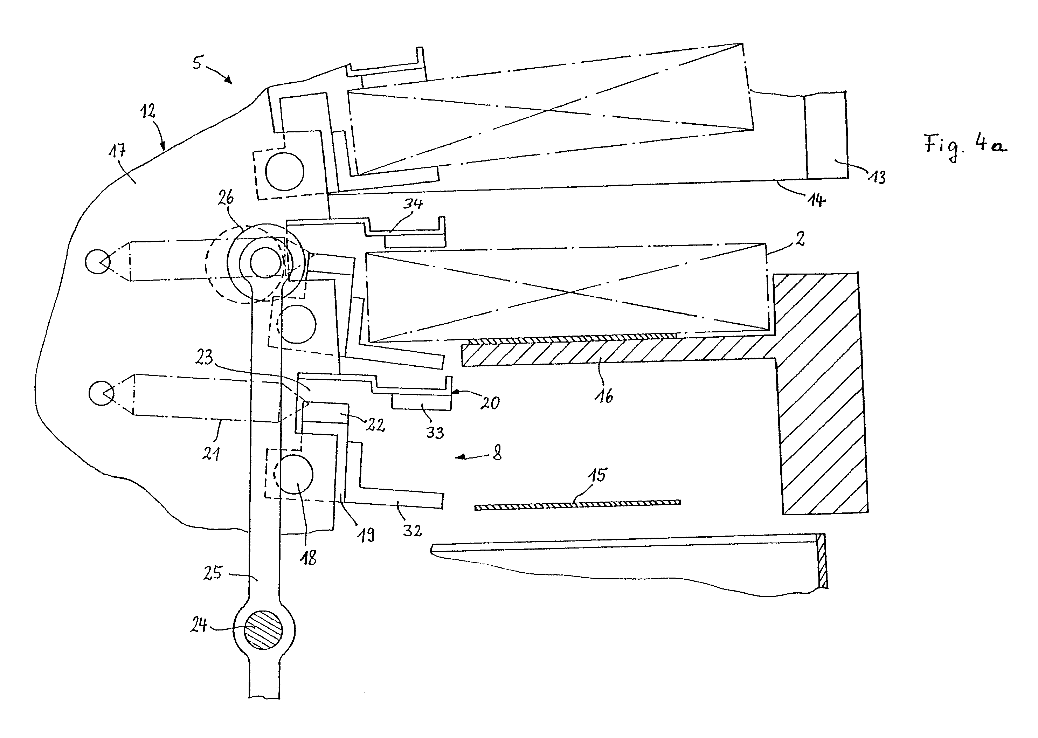

Fig. 4a und 4b (letztere im Verhältnis zu ersterer verkleinert) zeigen ausschnittweise und schematisiert einen Speicher für die Vorrichtung der Fig. 1 bis 3.

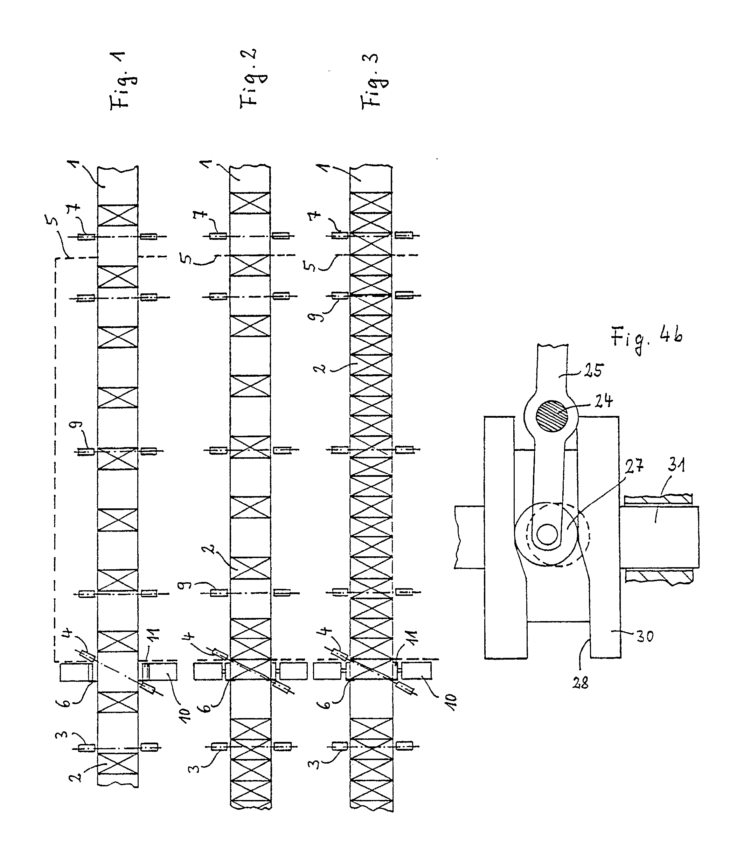

Die in den Fig. 1 bis 3 schematisch dargestellte Vorrichtung umfaßt einen mit gleichförmiger Geschwindigkeit angetriebenen Förderer 1 zum Fördern von Zigarettenpäckchen 2, die auf einem Zigarettenpacker hergestellt und von diesem in regelmäßigen Intervallen an den Förderer 1 aufgabeseitig abgegeben werden, um abgabeseitig einer Folieneinschlagmaschine zugeführt zu werden, die dazu dient, die Zigarettenpäckchen 2 in Klarsichtfolie (üblicherweise mit Aufreißstreifen versehen) einzuhüllen. Wenn an der Folieneinschlagmaschine eine Störung auftritt, so daß diese nicht in der Lage ist, die angeförderten Zigarettenpäckchen 2 abzunehmen, bildet sich auf der durch den Förderer 1 gebildeten Förderstrecke ein Rückstau aus, der schließlich so groß ist, daß er von einem Sensor 3 erfaßt werden kann. Der Sensor 3 gibt dann, wenn er ein Zigarettenpäckchen 2 länger als dessen normale Durchlaufzeit feststellt, ein Auslösesignal ab, das einen weiteren, stromaufwärtigen Sensor 4 aktiviert, der am Austrittsende eines Speichers 5 angeordnet ist und beim Durchlauf eines Zigarettenpäckchens 2 die Betätigung eines Stoppers 6 auslöst, der dieses Zigarettenpäckchen 2 anhält, so daß sich hinter diesem auf der Förderstrecke ein weiterer Stau von Zigarettenpäckchen 2 bildet (Fig. 2).

Die Förderstrecke des Förderers 1 läuft durch den Speicher 5, der eintrittsseitig einen Sensor 7 aufweist. Wenn der Sensor 7 ein Zigarettenpäckchen 2 während einer Zeitspanne länger als der normale Durchlauf eines Zigarettenpäckchen 2 feststellt, bedeutet dies, daß sich der durch den Stopper 6 verursachte Stau über die gesamte Länge des Speichers 5 erstreckt (Fig. 3). In diesem Falle löst das Ausgangssignal des Sensors 7 die Betätigung einer Zange 8 des Speichers 5 zum Greifen der sich über die Länge des Speichers 5 erstreckenden Reihe von Zigarettenpäckchen 2 und Ausschwenken der Zange 8 aus der Förderstrecke aus. Wenn mehrere Zangen 8 vorhanden sind, kann dies entsprechend oft geschehen. Zweckmäßigerweise ist die Kapazität des Speichers 5 derart, daß die bei normalen Störungen der Folieneinschlagmaschine anfallenden Zigarettenpäckchen 2 vom Speicher 5 ohne weiteres aufnehmbar sind.

Wenn die Störung an der Folieneinschlagmaschine beseitigt ist, wird wieder normal gefördert. Wenn dagegen zigarettenpackerseitig eine Störung auftritt, die dazu führt, daß keine Zigarettenpäckchen 2 mehr an den Förderer 1 abgegeben werden, wird der Inhalt des Speichers 5 wieder an den Förderer 1 abgegeben. In diesem Fall stellen die Sensoren 3 und 7 fest, daß während einer bestimmten Zeit, die länger als die normale Durchlaufzeit eines Zigarettenpäckchens 2 ist, kein Zigarettenpäckchen 2 erschienen ist. Durch das gleichzeitige Auftreten der Freigabesignale der Sensoren 3 und 7 wird das Einschwenken der mit einer, Reihe von Zigarettenpäckchen 2 gefüllten Zange 8 in die Förderstrecke und das Öffnen der Zange 8 und damit das Freigeben der von dieser Zange 8 gehaltenen Reihe von Zigarettenpäckchen 2 ausgelöst, die dann durch den Förderer 1 der Folieneinschlagmaschine zugeführt werden. Dieser Vorgang wiederholt sich nach Bedarf, solange sich noch Zigarettenpäckchen 2 im Speicher 5 befinden, so daß der Betrieb der Folieneinschlagmaschine nicht unter der Störung des Zigarettenpackers zu leiden braucht. Die Kapazität des Speichers 5 ist daher zweckmäßigerweise auch so bemessen, daß normale Störungen des Zigarettenpackers gepuffert werden können.

Damit festgestellt werden kann, wann die Förderstrecke im Bereich des Speichers 5 frei und damit der Inhalt der nächsten Zange 8 an den Förderer 1 abgegeben werden kann, sind zusätzliche Sensoren 9 im Bereich des Speichers 5 vorgesehen, die ein entsprechendes Freigabesignal abgeben können. Stattdessen kann aber auch der Sensor 4 verwendet werden, der in diesem Falle auf den fehlenden Durchgang eines Zigarrettenpäckchens 2 während eines genügend langen Zeitraums anzusprechen hat, um ein entsprechendes Freigabesignal zu erzeugen.

Als Sensoren 3, 4, 7 und 9 werden zweckmäßigerweise optische Abtaster etwa als Lichtschranken verwendet, jedoch können gegebenenfalls auch Näherungsschalter o.dgl. eingesetzt werden.

Als Stopper 6 kommt beispielsweise eine Schranke infrage, die - wie dargestellt - zweiteilig ausgebildet sein kann und mittels entsprechender Zylinder 10 in den Weg der Zigarettenpäckchen 2 auf der Förderstrecke des Förderers 1 schiebbar ist. Das hiervon angehaltene Zigarettenpäckchen 2 kann gleichzeitig auch noch zwischen entsprechenden Greifbacken 11 der Schranke gegriffen werden. Auch können die Greifbacken 11 alleine verwendet werden. Die Zylinder 10 können beispielsweise pneumatisch oder hydraulisch betätigbar sein. Auch kann die Betätigung über Elektromagnete erfolgen.

Die bevorzugte Ausführungsform für den Speicher 5 umfaßt eine Trommel 12, die mittels eines entsprechenden Antriebs um jeweils eine Zangenteilung in beiden Drehrichtungen um eine Drehachse drehbar ist. Die Trommel 12 ist innerhalb einer Haube 13 angeordnet, in der eine seitliche Ausnehmung 14 vorgesehen ist, durch die sich der Förderer 1 mit seinem Fördergurt 15 erstreckt, dessen Obertrum durch eine Auflageplatte 16 unterstützt wird.

Die Trommel umfaßt zwei in entsprechendem Abstand zueinander angeordnete, im wesentlichen kreisförmige, koaxial auf der Drehachse befestigte, seitliche Trommelplatten 17, die zur Lagerung von sich zwischen diesen erstreckenden Wellen 18 dienen, mit denen jeweils eine schwenkbare Greifbacke 19 einer Zange 8 verbunden ist. Zwischen den Trommelplatten 17 erstrecken sich ferner im wesentlichen in Radialrichtung nach außen vorstehende, trommelplattenfest angeordnete Greifbacken 20. Die ebenfalls im wesentlichen radial nach außen vorstehenden, schwenkbaren Greifbacken 19 sind in Greifposition mittels Schraubenfedern 21 vorgespannt, die einerseits an den Trommelplatten 17 befestigt sind und andererseits an einem axial nach außen ragenden Vorsprung 22 der beweglichen Greifbacken 19 angreifen. Die Vorsprünge 22 erstrecken sich durch entsprechende, zum Außenumfang hin offene Ausnehmungen 23 der Trommelplatten 17.

In der Übergabestation vom Speicher 5 an den Förderer 1 und umgekehrt greift ein um eine Drehachse 24 schwenkbarer, zweiarmiger Hebel 25 mit einer an seinem einen freien Ende angeordneten Rolle 26 an dem Vorsprung 22 an. Der Hebel 25 besitzt am anderen freien Ende ebenfalls eine Rolle 27, die mit einer Kurve 28 in Eingriff steht, die am Umfang einer Scheibe 30 als Nut ausgebildet ist. Die Scheibe 30 sitzt auf einer Welle 31, die mit einem entsprechenden Antrieb gekoppelt ist, der durch entsprechende Signale der Sensoren 3, 4, 7 und 9 zum Öffnen bzw. Schließen der in der Übergabeposition befindlichen Zange 8 betätigbar ist. Hierdurch wird der Hebel 25 zwischen der ausgezogen dargestellten und der gestrichelt dargestellten Position der Rollen 26, 27 verschwenkt. In der ausgezogen dargestellten Position wirkt die Rolle 26 auf den Vorsprung 22 ein, um die Zange 8 in die geöffnete Position zu bringen, damit die vom Förderer 1 geförderten Zigarettenpäckchen 2 den Speicher 5 ungehindert passieren können. Bei Auftreten eines entsprechenden Signals von Sensor 7 wird der Hebel 25 über die Kurve 28 zurückgeschwenkt, so daß die Schraubenfeder 21 die Greifbacke 19 in die Greifstellung schwenkt. Hierdurch wird die Reihe von Zigarettenpäckchen 2, die sich auf dem Förderer 1 im Bereich des Speichers 5 befindet, durch die in der Übergabeposition befindliche Zange 8 erfaßt und die Zange 8 dann aufwärts um eine Zangenteilung weggeschwenkt, damit sich eine neue Reihe von Zigarettenpäckchen 2 auf dem Förderer 1 im Bereich des Speichers 5 ausbilden kann, die in gleicher Weise von der nachfolgenden Zange 8 erfaßt werden kann.

Wenn entsprechende Freigabesignale der Sensoren 3, 7 und 9 vorliegen, wird die Trommel 12 um eine Zangenteilung zurückgeschwenkt, so daß eine Zange 8, die eine Reihe von Zigarettenpäckchen 2 hält, in die Übergabestation gelangt. Hier wird über entsprechendes Schwenken des Hebels 25 in die ausgezogen dargestellte Position die Zange 8 geöffnet, so daß die auf dem Obertrum des Förderers 1 aufliegende Reihe von Zigarettenpäckchen 2 abtransportiert werden kann.

Die bewegliche Greifbacke 19 besitzt ein Winkelprofil 32, das sich über die Länge des Speichers 5 erstreckt. Die trommelfeste Greifbacke 20 umfaßt ein sich ebenfalls über die Länge des Speichers 5 erstreckendes elastisches Kissen 33, gegen das das Winkelprofil 32 die jeweilige Zigarettenpäckchenreihe schonend drückt. Das Kissen 33 ist an einem dünnwandigen, beim Greifen etwas federnd nachgiebigem Profil 34 befestigt.

## Ansprüche

1. Vorrichtung zum Fördern und Zwischenspeichern von quaderförmigen Gegenständen (2), insbesondere Zigarettenpäckchen, über eine sich zwischen einem Aufgabe- und einem Abgabeende erstreckende Förderstrecke zur Anordnung zwischen zwei Verpackungsstationen, mit einem an der Förderstrecke angeordneten, ersten Sensor (3) zum Feststellen eines Staus von Gegenständen (2) am Abgabeende der Förderstrecke und einem über ein Auslösesignal des ersten Sensors (3) mit einer Vielzahl von Gegenständen (2) füllbaren Speicher (5), wobei sich die Förderstrecke durch den Speicher (5) hindurcherstreckt, an dessen Austrittsende ein zweiter Sensor (4) zum Feststellen des Vorhandenseins eines Gegenstandes (2) und ein davon in Gang setzbarer Stopper (6) für den als vorhanden festgestellten Gegenstand (2) angeordnet ist, wobei der Speicher (5) wenigstens eine Zange (8) zum Greifen einer Reihe aus einer Vielzahl von Gegenständen (2) und Aus- bzw. Einschwenken der ergriffenen Reihe von Gegenständen (2) aus der bzw. in die Förderstrecke umfaßt, wobei die Zange (8) zum Greifen und Ausschwenken über einen am Eintrittsende des Speichers (5) befindlichen dritten Sensor (7), wenn dieser während einer Zeitspanne länger als die Durchlaufzeit eines Gegenstandes (2) einen Gegenstand (2) feststellt, und zum Einschwenken und Freigeben über Freigabesignale des ersten und dritten Sensors (3, 7) betätigbar ist.

2. Vorrichtung nach Anspruch 1, dadurch gekennzeichnet, daß im Bereich des Speichers (5) wenigstens ein vierter Sensor (9) zum Prüfen des Vorhandenseins von Gegenständen (2) angeordnet ist, der ein Freigabesignal für das Einschwenken und Freigeben bei fehlenden Gegenständen (2) abgibt.

3. Vorrichtung nach Anspruch 1 oder 2, dadurch gekennzeichnet, daß der Speicher (5) ein Trommelspeicher mit einer Vielzahl um die Trommelachse schrittweise drehbaren, sich jeweils über die Speicherlänge erstreckenden Zangen (8) ist.

4. Vorrichtung nach einem der Ansprüche 1 bis 3, dadurch gekennzeichnet, daß die Zange (8) eine feststehende und eine dieser gegenüber bewegliche Greifbacke (19, 20) aufweist.

5. Vorrichtung nach Anspruch 4, dadurch gekennzeichnet, daß die bewegliche Greifbacke (19) in die Greifposition federvorgespannt und durch ein Betätigungselement (25) in die geöffnete Position schwenkbar ist.

6. Vorrichtung nach Anspruch 5, dadurch gekennzeichnet, daß das Betätigungselement (25) ein kurvengesteuerter Hebel ist.

7. Vorrichtung nach einem der Ansprüche 4 bis 6, dadurch gekennzeichnet, daß eine der Greifbacken (19, 20), insbesondere die feststehende, elastisch ist.

8. Vorrichtung nach einem der Ansprüche 1 bis 7, dadurch gekennzeichnet, daß der Stopper (6) eine Schranke ist.

9. Vorrichtung nach einem der Ansprüche 1 bis 8, dadurch gekennzeichnet, daß der Stopper (6) eine Greifeinrichtung ist.

10. Speicher für eine Vielzahl von quaderförmigen Gegenständen (2), insbesondere Zigarettenpäckchen, mit um eine Achse drehbaren Speicherelementen, dadurch gekennzeichnet, daß die Speicherelemente Zangen (8) sind, deren Greifbacken (19, 20) sich in Achsrichtung erstrecken und die in Greifstellung zur Aufnahme jeweils einer Reihe von Gegenständen (2) vorgespannt sind, wobei die Zangen (8) schrittweise in eine Übergabeposition zur Aufnahme bzw. Abgabe jeweils einer Reihe von Gegenständen (2) beweglich und die sich in der Übergabeposition befindliche Zange (8) in Freigabeposition bringbar ist.

11. Speicher nach Anspruch 10, dadurch gekennzeichnet, daß die Zangen (8) jeweils eine feststehende und eine bewegliche Greifbacke (19, 20) aufweisen.

12. Speicher nach Anspruch 11, dadurch gekennzeichnet, daß die bewegliche Greifbacke (19) in die Greifposition federvorgespannt und durch ein Betätigungselement (25) in die geöffnete Position schwenkbar ist.

13. Speicher nach Anspruch 12, dadurch gekennzeichnet, daß das Betätigungselement (25) ein kurvengesteuerter Hebel ist.

14. Speicher nach einem der Ansprüche 11 bis 13, dadurch gekennzeichnet, daß eine Greifbacke (19, 20), insbesondere die feststehende, elastisch ist.

15. Speicher nach einem der Ansprüche 10 bis 14, dadurch gekennzeichnet, daß ausgangsseitig ein sensorgesteuerter Stopper (6) für quaderförmige Gegenstände (2) angeordnet ist.

16. Speicher nach einem der Ansprüche 10 bis 15, dadurch gekennzeichnet, daß eintrittsseitig ein, Sensor (7) für quaderförmige Gegenstände (2) zum Betätigen der in der Übergabeposition befindlichen Zange (8) angeordnet ist.

17. Speicher nach einem der Ansprüche 10 bis 16, dadurch gekennzeichnet, daß im Bereich der Übergabeposition wenigstens ein Sensor (9) zum Prüfen des Vorhandenseins von Gegenständen (2) angeordnet ist, der ein Freigabesignal für das Einschwenken einer mit Gegenständen (2) bestückten Zange (8) in die Übergabeposition und Freigeben der Gegenstände (2) durch die eingeschwenkte Zange (8) abgibt.

EP 0 416 441 A1

Fig. 1

Fig. 2

Fig. 3

Fig. 4b

Fig. 4a

EP 0 416 441 A1

**Europäisches Patentamt**

**EUROPÄISCHER RECHERCHENBERICHT**

Nummer der Anmeldung

**EP 90 11 6451**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 499 987 (LONG)<br>* Insgesamt * | 1-6,8,<br>15-17 | B 65 B 35/04<br>B 65 G 47/51 |
| Y | EP-A-0 243 757 (FOCKE)<br>* Seite 6, Zeile 7 - Seite 8, Zeile 27; Figuren 1,4,5 * | 1-6,8,<br>15-17 | |
| X<br>A,D | FR-A-2 323 605 (MOLINS)<br>* Seite 3, Zeilen 14-20; Figur 1 * | 10-13<br>1,9 | |
| A | US-A-1 652 030 (LUCE)<br>* Seite 2, Zeilen 53-56; Figuren 2,3 * | 7,14 | |
| A | GB-A-2 170 169 (E.D.) | | |
| A | EP-A-0 187 981 (FOCKE) | | |

| | |
|---|---|
| | RECHERCHIERTE SACHGEBIETE (Int. Cl.5)<br><br>B 65 B<br>B 65 G |

Der vorliegende Recherchenbericht wurde für alle Patentansprüche erstellt

| Recherchenort | Abschlußdatum der Recherche | Prüfer |
|---|---|---|
| Den Haag | 09 November 90 | SCHELLE,J. |